# EUROPEAN PATENT SPECIFICATION

(11) **EP 1 771 864 B1**
(45) Date of publication and mention of the grant of the patent: **09.04.2008**
(21) Application number: 05761567.6
(22) Date of filing: 06.07.2005
(51) Int. Cl.: G21F 9/28, G21F 9/30

(54) **METHOD FOR THE HANDLING AND MINIMISATION OF WASTE**
VERFAHREN ZUR HANDHABUNG UND MINIMIERUNG VON ABFALL
PROCEDE POUR LA MANIPULATION ET LA MINIMISATION DE DECHETS

(30) Priority: 08.07.2004 GB 0415335
(43) Date of publication of application: 11.04.2007
(73) Proprietor: Nuclear Decommissioning Authority, Cumbria CA24 3HU (GB)
(72) Inventor: TOMBS, Christopher, Cheshire WA3 4JT (GB); BEAUMONT, David Michael, Warrington, Cheshire WA3 6UU (GB); CASSIDY, Carolyn Mavis, Warrington, Cheshire (GB)
(74) Representative: Chalk, Anthony John
(86) International application number: PCT/GB2005/002636
(87) International publication number: WO 2006/005905

(56) References cited:
- DE-U1- 8 033 483
- US-A- 4 560 502
- US-A- 4 798 524
- US-A- 5 832 392
- PATENT ABSTRACTS OF JAPAN vol. 018, no. 175 (P-1716), 24 March 1994 (1994-03-24) & JP 05 340861 A (MITSUBISHI NUCLEAR FUEL CO LTD), 24 December 1993 (1993-12-24)
- PATENT ABSTRACTS OF JAPAN vol. 012, no. 233 (P-724), 5 July 1988 (1988-07-05) & JP 63 026558 A (DENKI KAGAKU KOGYO KK), 4 February 1988 (1988-02-04)
- PATENT ABSTRACTS OF JAPAN vol. 2000, no. 08, 6 October 2000 (2000-10-06) & JP 2000 147186 A (JAPAN NUCLEAR FUEL CO LTD<JNF>), 26 May 2000 (2000-05-26)

## Description

### Field of the Invention

The present invention relates to the handling of waste materials. More specifically, it is concerned with the handling and minimisation of waste materials generated in the nuclear industry, and provides a novel technique for estimating the uranium content of nuclear waste materials, from which ²³⁹Pu, together with other actinides and fission product radionuclides, can be estimated. The technique initially relies on establishing the physical parameters of the waste material which, together with a knowledge of the age and irradiation history of the spent fuel from which the waste material was derived, facilitates the determination of the uranium and radio-isotopic content.

### Background to the Invention

Much of the attention of the nuclear industry is directed towards clean-up and waste disposal activities and, in this context, many new techniques for dealing with waste materials have been introduced in recent years. These new techniques are varied in approach, since the nature of the waste material which is being handled can vary greatly, so that techniques must be made available which can deal with, for example, liquid wastes on the one hand and, on the other hand, dried, compacted waste materials resulting from processes such as Magnox decladding operations.

In the case of the latter type of waste materials, and other solid waste residues encountered in the nuclear industry, there is a strong emphasis on the minimisation of waste volumes prior to disposal, partly as a result of the introduction of more stringent legislation in this area, but also in view of the obvious health and safety, and economic aspirations of those involved in the industry. As a consequence, processes have previously been devised which require the compaction of such waste materials prior to long term storage.

Thus, for example, a process is envisaged which is particularly useful for the treatment of so-called Intermediate Level Waste (ILW) which facilitates minimisation of the volume of waste material which is intended for repository storage. The waste feed materials typically comprise, for example,
(i) sludges and solids arising from, for example, underwater stored Magnox fuel cladding and associated spent fuel residues from decladding operations, wherein the materials range from essentially uncorroded solids to fully corroded sludges and mixtures thereof; and
(ii) sludges arising from the corrosion of underwater stored clad spent fuel

Both waste feed types (i) and (ii) may be associated with so-called miscellaneous beta-gamma waste, this typically comprising plant maintenance waste, pond furniture, laboratory waste, and the like.

The waste feed materials would be placed in sacrificial cans, having been initially screened, if necessary, to remove the bulk of the miscellaneous beta-gamma waste. The waste would have water removed as necessary by means of, for instance, a thermal drying process. The cans would then be compacted, and the compacted cans, or "pucks", would subsequently be placed in drums which could then be subjected to a treatment such as infill grouting, typically using cement, before being sent to storage.

Problems may be encountered with these solid wastes, however, since many of them are not homogeneous, with the consequence that suitable radionuclide inventory data are frequently not available in order to facilitate adequate fissile control for drum filling purposes. In the event that the amounts of fissile materials within the drums exceeded certain limits, it could possibly be envisaged that there may be the occurrence of a criticality event if particularly extreme conditions were encountered in the repository, and this could result in the generation of pulses of potentially harmful radiation.

US-A-4560502 discloses moulded bodies made of graphite, with nickel sulfide as a binding agent, which are used for the longtime fixation of radioactive and toxic waste. These moulded bodies are shown to have especially good properties if the nickel sulfide is in the form of Ni₃S₂. However, the patent does not address the problem of the determination of uranium content from the density of the solid waste.

US-A-5832392 teaches a method for packaging spent nuclear fuel for long-term disposal in a geological repository wherein at least one spent nuclear fuel assembly is first placed in an unsealed waste package and a depleted uranium fill material is added to the waste package. The depleted uranium fill material comprises flowable particles having a size sufficient to substantially fill any voids in and around the assembly and contains isotopically-depleted uranium in the +4 valence state in an amount sufficient to inhibit dissolution of the spent nuclear fuel from the assembly into a surrounding medium and to lessen the potential for nuclear criticality inside the repository in the event of failure of the waste package. The waste package is sealed, thereby substantially reducing the release of radionuclides into the surrounding medium, while simultaneously providing radiation shielding and increased structural integrity of the waste package. The claimed method is not, however, concerned with the determination of uranium content from the density of the solid waste.

Consequently, there is clearly a requirement for a measurement based technique which will allow for the estimation of fissile materials within drums, and thereby facilitate the control of the amount of fissile material in waste packages. It is this requirement which the present invention seeks to address. The present inventors have found that it is possible to utilise the considerable difference in the density of uranium and its compounds when compared with the density of the other components which are generally to be found in these waste materials in order to provide reliable estimates of improved accuracy relating to the fissile content of the residues contained in the wastes. Thus, by relying on the measurement of the physical dimensions and weight of compacted pucks of nuclear waste materials, and combining this with a knowledge of the fuel irradiation history, it is possible to derive the fissile content of the waste materials, thereby allowing for the maximisation of volume utilisation during storage and disposal, whilst also ensuring compliance with all regulatory requirements.

### Statements of Invention

Thus, according to the present invention, there is provided a method for the determination of the uranium content of solid nuclear waste materials, said method comprising establishing the physical parameters of said waste materials by measurement of the dimensions and the weight of the waste materials.

Preferably, the solid nuclear waste materials comprise compacted solid nuclear waste materials.

Furthermore, the present invention provides for the determination of the levels of ²³⁹Pu, other actinides and fission product radionuclides in said nuclear waste materials, said levels being derived from a knowledge of the uranium content and the irradiation history of said waste materials by the application of standard algorithms according to procedures well known to those skilled in the art.

### Description of the Invention

The method of the invention is particularly applicable to the determination of the fissile content of solid waste materials, comprised in, for example, ILW. Such materials predominantly comprise uranium and uranium compounds, together with magnesium and, typically in the case of waste materials which have been stored under water, magnesium compounds. These substances could, for instance, result from adventitious uranium attached to cladding material, through a range of uranium concentrations to substantial pieces of uranium spent fuel rod. Since the densities of the uranium-containing materials are much higher than those of the magnesium-containing materials, it is possible to obtain a good estimate of the uranium content of the waste from the measurement of its physical parameters. In view of the fact that the method relies on this difference in the densities of materials, it is commonly referred to as the Differential Density Technique.

In addition to the aforementioned waste materials, the method is also well suited to the treatment of waste from metallic and oxide fuel which includes other cladding materials, for example aluminium-based cladding materials.

The method of the invention may be applied to waste materials which are either in a compacted or non-compacted form. Preferably, however, the waste materials which are the subject of the method of the present invention comprise compacted waste materials. Typically, therefore, the method of the invention additionally comprises a compacting process to reduce the volume of the waste materials; said compacting process precedes the establishment of the physical parameters of the waste materials. A preferred compacting process comprises introducing waste material into a sacrificial can, generally comprising a metal container, substantially drying the waste material if necessary, and physically compacting the can, for example by means of a press, to form a puck.

Preferably, physical parameters which are established according to the method of the invention comprise the weight and dimensions of a waste material. The advantages of compacting the waste material prior to the measurement of these dimensions will be clearly apparent to the skilled person. In a particularly preferred embodiment of the invention, the compaction process is performed in a fixed diameter, fixed maximum force compactor. As well as the obvious benefits in terms of handleability which accrue as a consequence of dealing with materials treated by such means, the use of certain fixed parameters in the process reduces the requirements in terms of further parameter measurement for individual waste samples. Thus, in the case of pucks obtained from the compaction in such compactors of nuclear waste materials contained in sacrificial cans, sufficient data can be obtained from the measurement of the height and weight of each puck.

The establishment of the uranium content of a sample of compacted waste is a relatively straightforward matter from a knowledge of the relative densities of the component materials, and the weight and physical dimensions of the compacted sample. Calculation of the theoretical weight of a uranium-free sample of the same dimensions is a routine matter and, from the difference between the theoretical and actual weights, it is possible to establish the uranium content. By means of an examination of the reactor history of the waste residue under consideration, it becomes possible for the fissile content of the compacted residue to be determined.

Knowledge of the fissile content of waste materials is crucial when determining routes for their safe storage and/or disposal. Thus, for example, in the case of compacted pucks of nuclear waste, algorithms have been established which are applicable to the loading of pucks, several at a time, into waste packages. Selection criteria include puck weight, height and fissile content, and the algorithms allow for the maximisation of package volume utilisation, whilst also ensuring adherence to potential recommended limits in terms of fissile content and weight.

The method of the present invention facilitates the determination of the fissile plutonium content of waste materials, which is also an important consideration in the safe storage and/or disposal of the waste. This is most conveniently achieved by the application of an appropriate fissile plutonium to uranium ratio as a multiplier. Additional corroboration of this data may optionally be provided, for example, by means of passive neutron monitoring (PNM).

Typically, calculations are performed in two variants, to obtain an upper bounding case estimate and a best estimate of the fissile content of a waste material. The upper bounding case estimate provides a maximum possible value for the fissile content, whilst the best estimate represents the expectation value for the actual amount of fissile material which is present. Essentially, the best estimate is derived from the actual measured data relating to a compacted waste, and typical values are assumed for other variables, whereas the upper bounding case estimate relies on a series of worst case assumptions relating to the various parameters. Corroboration of the best estimate values may be obtained from PNM data. A comparison of the derivation of the two estimates in the case of pucks of compacted dry waste materials may be gleaned from Table 1.

The method of the present invention provides several advantages over the methods of the prior art. Conventionally, waste fissile content has been determined using radioactivity monitors. However, such monitors are generally complex and expensive, and frequently require lengthy periods of monitoring to be undertaken. Furthermore, comparative evaluations have shown that fissile monitors often provide less accurate results than are available via the Differential Density Technique. All of these concerns apply, for example, to the PNM technique previously mentioned.

The method obviates the requirement for a waste material to be well characterised at the point of measurement. It also generally provides an upper bounding estimate for the maximum uranium and plutonium mass in a given sample which is closer to the actual value of the fissile content than is achievable via certain other techniques. As a consequence, the use of the method ensures that no fissile limits are exceeded, and that waste disposal conditions are met, whilst also ensuring that overall waste volumes are minimised as a consequence of improved package volume utilisation.

**Table 1. Assumptions used for establishment of Best Estimate and Upper Bounding Case Estimate for Dried Nuclear Waste Materials.**

| Parameter | Best Estimate assumption | Upper Bounding Case Estimate assumption |
|---|---|---|
| Puck mass | Measured value | Maximum positive error |
| Puck height | Measured value | Maximum negative error |
| Can materials | Mass and volume depend on can type but are otherwise fixed | Same values used as for Best Estimate |
| Non-waste related voidage | Typical value used, dependent on can type | Pessimistic (maximum credible) value used, dependent on can type |
| Residual water content of waste after drying | Typical value used, dependent on waste source | Assumed to be zero |
| Miscellaneous beta-gamma waste content of waste | Typical value used, dependent on waste source | Assumed to be zero |
| Density of matrix | Calculated from ratio of Magnox to Mg(OH)₂ for each waste source, based on expectation values for compacted voidage | Assumed to be the lowest credible value |
| Density of uranium species | Calculated from ratio of uranium metal to uranium oxide for each waste source, based on expectation values for compacted voidage | Uranium assumed to be present wholly as oxides; density assumed to be lowest credible value for mixed uranium oxides |

Furthermore, the Differential Density Technique, being reliant only on the measurement of physical parameters such as dimensions and weights, does not depend on the use of complex instrumentation which has high maintenance requirements and, therefore, provides a simple, robust, cheap and reliable technique for the determination of the fissile content of nuclear waste materials, which offers the possibility of reduced waste handling and minimised waste volumes, thereby leading to significant environmental, as well as economic, benefits.

## Claims

1. A method for the determination of the uranium content of solid nuclear waste materials, said method comprising establishing the physical parameters of said waste materials by measurement of the dimensions and the weight of said waste materials.

2. A method as claimed in claim 1 wherein said determination comprises the application of standard algorithms to data comprising said physical parameters and the relative densities of said materials.

3. A method as claimed in claim 1 or 2 wherein said solid nuclear waste materials comprise compacted solid nuclear waste materials.

4. A method as claimed in claim 3 which comprises a compacting process.

5. A method as claimed in claim 4 wherein said compaction process is performed in a compactor.

6. A method as claimed in claim 5 wherein said compactor comprises a fixed diameter, fixed maximum force compactor.

7. A method as claimed in claim 4, 5 or 6 wherein said compacting process precedes the establishment of the physical parameters of said waste materials.

8. A method as claimed in any one of claims 4 to 7 wherein said compacting process comprises introducing a waste material into a sacrificial can and physically compacting the can to form a puck.

9. A method as claimed in claim 8 wherein said compacting process additionally comprises drying the waste material prior to compacting the sacrificial can.

10. A method as claimed in claim 8 or 9 wherein said sacrificial can comprises a metal container.

11. A method for the establishment of the levels of ²³⁹Pu, other actinides and fission product radionuclides in nuclear waste materials, said method comprising determining said levels from the value of the uranium content of said waste materials as determined by means of the method as claimed in any preceding claim, and the irradiation history of said waste materials, by the application of standard algorithms.

12. A method as claimed in any preceding claim wherein said solid waste materials comprise waste materials comprised in ILW.

13. A method as claimed in claim 12 wherein said waste materials predominantly comprise uranium and uranium compounds, together with magnesium and magnesium compounds.

14. A method as claimed in any one of claims 1 to 11 wherein said solid waste materials comprise waste from metallic and oxide fuel, together with associated aluminium-based cladding.

15. A method as claimed in any one of claims 8 to 10 wherein said physical parameters comprise the height and weight of said puck.

## Patentansprüche

1. Verfahren zur Bestimmung des Urangehalts von festem radioaktivem Abfallmaterial, wobei das Verfahren das Ermitteln der physikalischen Parameter des Abfallmaterials durch Messung der Dimensionen und des Gewichtes des Abfallmaterials umfasst.

2. Verfahren nach Anspruch 1, bei dem die Bestimmung die Anwendung eines Standardalgorithmus auf Daten umfasst, welche die physikalischen Parameter und die relativen Dichten des Materials umfassen.

3. Verfahren nach Anspruch 1 oder 2, bei dem das feste radioaktive Abfallmaterial verdichtetes festes radioaktives Abfallmaterial umfasst.

4. Verfahren nach Anspruch 3, das einen Verdichtungsprozess umfasst.

5. Verfahren nach Anspruch 4, bei dem der Verdichtungsprozess in einer Presse ausgeführt wird.

6. Verfahren nach Anspruch 5, bei dem die Presse eine Presse mit festem Durchmesser und fester maximaler Kraft umfasst.

7. Verfahren nach Anspruch 4, 5 oder 6, bei dem der Verdichtungsprozess der Feststellung der physikalischen Parameter des Abfallmaterials vorangeht.

8. Verfahren nach einem der Ansprüche 4 bis 7, bei dem der Verdichtungsprozess ein Einführen von Abfallmaterial in eine Aufnahmedose und ein körperliches Verdichten der Dose in die Form eines Pucks umfasst.

9. Verfahren nach Anspruch 8, bei dem der Verdichtungsprozess zusätzlich ein Trocknen des Abfallmaterials vor dem Verdichten der Aufnahmedose umfasst.

10. Verfahren nach Anspruch 8 oder 9, bei dem die Aufnahmedose einen Metallbehälter umfasst.

11. Verfahren zum Ermitteln der Zustände von ²³⁹Pu, anderen Actiniden und anderen Spaltungsprodukt-Radionukliden in radioaktivem Abfallmaterial, wobei das Verfahren ein Bestimmen der Zustände von dem Wert des Urangehalts des Abfallmaterials, wie bestimmt mittels des Verfahrens nach einem der vorhergehenden Ansprüche, und der Bestrahlungsgeschichte des Abfallmaterials durch Anwenden des Standardalgorithmus umfasst.

12. Verfahren nach einem der vorhergehenden Ansprüche, bei dem das feste Abfallmaterial Abfallmaterialien umfasst, die in Abfall mit mittlerer Aktivität enthalten sind.

13. Verfahren nach Anspruch 12, bei dem die Abfallmaterialien vorwiegend Uran und Uranverbindungen zusammen mit Magnesium und Magnesiumverbindungen enthalten.

14. Verfahren nach einem der Ansprüche 1 bis 11, bei dem die festen Abfallmaterialien Abfall aus metallischen und Oxidbrennstoff umfassen, zusammen mit zugehörigen aluminiumbasierten Brennstoffhüllen.

15. Verfahren nach einem der Ansprüche 8 bis 10, bei dem die physikalischen Parameter die Höhe und das Gewicht des Pucks umfassen.

## Revendications

1. Un procédé pour déterminer le contenu en uranium de déchets nucléaires solides, ledit procédé comprenant l'établissement des paramètres physiques des dits déchets par la mesure des dimensions et du poids des dits déchets.

2. Un procédé selon la revendication 1, dans lequel ladite détermination comprend l'application d'algorithmes standards aux données comprenant lesdits paramètres physiques et les densités relatives des dits déchets.

3. Un procédé selon l'une des revendications 1 et 2, dans lequel lesdits déchets nucléaires solides comportant des déchets nucléaires solides compactés.

4. Un procédé selon la revendication 3, qui comporte un processus de compactage.

5. Un procédé selon la revendication 4, dans lequel ledit processus de compactage est effectué dans un compacteur.

6. Un procédé selon la revendication 5, dans lequel ledit compacteur comporte un compacteur de diamètre fixe et de force maximale fixe.

7. Un procédé selon l'une des revendications 4 à 6, dans lequel ledit processus de compactage précède l'établissement des paramètres physiques des dits déchets.

8. Un procédé selon l'une quelconque des revendications 4 à 7, dans lequel ledit processus de compactage comporte l'introduction des déchets dans un récipient sacrificiel et le compactage physique du récipient pour former une galette.

9. Un procédé selon la revendication 8, dans lequel ledit processus de compactage comprend en plus le séchage des déchets avant le compactage du récipient sacrificiel.

10. Un procédé selon l'une des revendications 8 et 9, dans lequel ledit récipient sacrificiel peut comporter un conteneur métallique,

11. Un procédé pour l'établissement de taux de ²³⁹Pu, d'autres actinides et radionucléides de produits de fission dans des déchets nucléaires, ledit procédé comprenant la détermination des dits taux à partir de la valeur du contenu en uranium des dits déchets telle que déterminée au moyen du procédé selon l'une quelconque des revendications précédentes, et de l'historique de l'irradiation des dits déchets, par l'application d'algorithmes standard.

12. Un procédé selon l'une quelconque des revendications précédentes, dans lequel lesdits déchets solides comprennent des déchets compris dans ILW.

13. Un procédé selon la revendication 12, dans lequel lesdits déchets comprennent principalement de l'uranium et des composés d'uranium, avec du magnésium et des composés de magnésium.

14. Un procédé selon l'une quelconque des revendications 1 à 11, dans lequel lesdits déchets solides comprennent des déchets provenant de combustibles métalliques et à oxydes, associés à un revêtement à base d'aluminium.

15. Un procédé selon l'une quelconque des revendications 8 à 10, dans lequel lesdits paramètres physiques comprennent la hauteur et le poids de ladite galette.
